# EUROPEAN PATENT APPLICATION

(11) **EP 4 852 523 A1**
(43) Date of publication of application: **09.12.2026**
(21) Application number: 25748274.5
(22) Date of filing: 22.01.2025
(51) Int. Cl.: H04W 36/14, H04W 8/02, H04W 8/18, H04W 36/18, H04W 76/34

(54) **MANAGEMENT DEVICE, METHOD, TERMINAL, AND COMMUNICATION SYSTEM**

(30) Priority: 30.01.2024 JP 2024011868
(71) Applicant: TOYOTA JIDOSHA KABUSHIKI KAISHA, Toyota-Shi, Aichi-Ken 471-8571 (JP)
(72) Inventor: SHAO Xiao, Toyota-shi Aichi 471-8571 (JP); ZHONG Lei, Toyota-shi Aichi 471-8571 (JP); MA Jing, Toyota-shi Aichi 471-8571 (JP); HIGUCHI Takamasa, Toyota-shi Aichi 471-8571 (JP)
(74) Representative: Cabinet Beau de Loménie
(86) International application number: PCT/JP2025/001905
(87) International publication number: WO 2025/164466

(57) **Abstract**

To appropriately suppress waste of network resources and throughput degradation when a plurality of networks are available, a management apparatus according to one aspect of the present disclosure includes: a communication unit that communicates with at least one of a first cellular network and a second cellular network; and a control unit that, when a terminal performing communication on the first cellular network initiates communication on the second cellular network before normal termination processing for the communication is performed, performs control to release management information on the first cellular network for the terminal.

## Description

### Technical Field

The present disclosure relates to a management apparatus, a method, a terminal, and a communication system in a mobile communication system.

### Background Art

In the standards for a 5th Generation Mobile Communication System (5G) defined by the Third Generation Partnership Project (3GPP (Registered Trademark)), which is a standardization project for mobile communication systems, cooperation between different networks (NWs) is specified.

For example, Non Patent Literatures 1 and 2 specify, as switching of communication between different networks, handover between an Evolved Packet System (EPS) and a 5G System (5GS), handover of Protocol Data Unit (PDU) sessions between a 3GPP access and a non-3GPP access, and the like.

### Citation List

### Non Patent Literature

[Non Patent Literature 1] 3GPP TS 23.501 V18.3.0 (2023-09) "System architecture for the 5G System (5GS); Stage 2 (Release 18)"
[Non Patent Literature 2] 3GPP TS 23.502 V18.3.0 (2023-09) "Procedures for the 5G System (5GS); Stage 2 (Release 18)"

### Summary of Invention

### Technical Problem

When a handover between different networks is appropriately performed, the resources allocated for communication on the network before switching are appropriately released.

However, in the current 3GPP standards, in cases where, for example, a user equipment (UE) communicating on a certain network switches to communication on another network due to a communication failure (for example, because the communication cannot be established due to a failure), the resources allocated for communication on the certain network are not released. In such cases, there is a risk that resources will be wasted or that the overall system throughput will not improve.

Therefore, one object of the present disclosure is to provide a management apparatus, a method, a terminal, and a communication system capable of appropriately suppressing waste of network resources and/or appropriately suppressing throughput degradation when a plurality of networks are available.

### Solution to Problem

A management apparatus according to one aspect of the present disclosure includes: a communication unit that communicates with at least one of a first cellular network and a second cellular network; and a control unit that, when a terminal performing communication on the first cellular network initiates communication on the second cellular network before normal termination processing for the communication is performed, performs control to release management information on the first cellular network for the terminal.

### Advantageous Effects of Invention

According to one aspect of the present disclosure, it is possible to appropriately suppress waste of network resources and appropriately suppress throughput degradation when a plurality of networks are available.

### Brief Description of Drawings

Fig. 1 is a diagram showing an example of a schematic configuration of a system according to one embodiment of the present disclosure.
Fig. 2 is a diagram showing an example of a schematic functional configuration of each apparatus according to one embodiment of the present disclosure.
Fig. 3 is a diagram showing an example of a schematic hardware configuration of each apparatus according to one embodiment of the present disclosure.
Fig. 4 is a diagram showing an example of deletion of unnecessary management information during network switching according to one embodiment of the present disclosure.
Fig. 5 is a diagram for describing an example of a control procedure for deleting MA PDU session information of a network before switching according to one embodiment of the present disclosure.

### Description of Embodiments

Hereinafter, an embodiment of the present disclosure will be described in detail with reference to the drawings. Note that in the specification and the drawings, repeated description of elements that can be described in a similar manner may be omitted by assigning the same reference signs thereto.

### <Explanation of Terms>

In the present disclosure, wording enclosed in parentheses within a sentence may indicate an explanation (e.g., spelling explanation) of the immediately preceding wording, a rephrasing, a specific example, a supplemental explanation, or the like. In addition, in the present disclosure, regarding wording enclosed by "[]" in a sentence, the meaning of the entire sentence including the wording may be interpreted as including the wording, or may be interpreted without including the wording (or by ignoring it). Note that "()" and "[]" may also be used for purposes or meanings other than those.

In the present disclosure, "A/B" and "at least one of A and B" may be used interchangeably. Furthermore, in the present disclosure, "A/B/C" may mean "at least one of A, B, and C".

In the present disclosure, a network function (NF) may include at least one of the following, for example:
- Application Function (AF) (e.g., a function that implements application servers external to the 5G Core Network (5GC)),
- Access and Mobility Management Function (AMF) (e.g., a function that manages UE registration, location, and the like),
- Data Network (DN) (e.g., a function that implements data networks external to the 5GC),
- Location Management Function (LMF) (e.g., a function of communication control related to location information services),
- Non-3GPP Inter-Working Function (N3IWF) (e.g., a function that connects the 5GC to untrusted non-3GPP access networks),
- Network Exposure Function (NEF) (e.g., a function that provides application interfaces for 5GC NF services to external entities),
- Network Slice Selection Function (NSSF) (e.g., a function that selects network slices),
- Network Data Analytics Function (NWDAF) (e.g., a function that analyzes network data),
- Operation, Administration and Maintenance (Management) (OAM) (e.g., a function that provides means for operation, administration, and maintenance),
- Policy Control Function (PCF) (e.g., a function that controls the quality of data transfer paths, policies, and the like),
- Session Management Function (SMF) (e.g., a function that manages sessions),
- Trusted Non-3GPP Gateway Function (TNGF) (e.g., a function that connects the 5GC to trusted non-3GPP access networks),
- Trusted WLAN Interworking Function (TWIF) (e.g., a function that connects the 5GC to trusted non-3GPP access networks for non-5G-capable UEs via a wireless local area network (LAN)),
- (Radio) Access Network ((R)AN) (e.g., a function that provides a radio access network),
- User Equipment (UE) (e.g., a function that enables users to access network services via a wireless interface),
- Unified Data Management (UDM) (e.g., a function that stores/manages subscriber information, UE authentication information, and the like),
- Unified Data Repository (UDR) (e.g., a function that manages authentication/authorization based on the subscriber information), and
- User Plane Function (UPF) (e.g., a function that transmits user data packets).

Note that these are merely examples, and it should be understood that NFs other than those described above are also covered by the present disclosure.

In the present disclosure, terms such as "switch", "reaccommodate", "update", "replace", "modify", "transfer/migrate", and the like are interchangeable.

### <Problem Analysis>

As described above, in the current 3GPP standards, in cases where, for example, a UE communicating on a certain network switches to communication on another network, the resources allocated for communication on the certain network may not be released. In such cases, there is a risk that resources will be wasted or that overall system throughput will not improve.

Therefore, the inventors devised a management apparatus and a method for appropriately releasing resources in the above-described cases.

### <System Configuration>

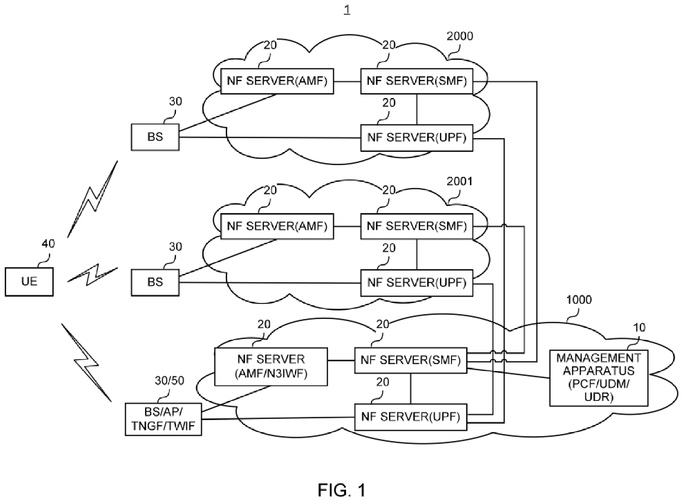

Fig. 1 is a diagram showing an example of a schematic configuration of a system according to one embodiment of the present disclosure. A system 1 includes a management apparatus 10, a network function (NF) server 20, a base station (BS) 30, a user equipment (UE) 40, and an access point (AP) 50. The system 1 may also be referred to as a wireless communication system, an information communication system, or the like.

The system 1 is, for example, a system compliant with a 3GPP Technical Specification (TS). More specifically, the system 1 may be a system compliant with a TS for a 5th Generation Mobile Communication System (5G) or New Radio (NR), for example.

Note that the system 1 is not limited to this example and may include systems utilizing a wireless communication method such as Long Term Evolution (LTE), LTE-Advanced (LTE-A), 4th Generation Mobile Communication System (4G), 5th Generation Mobile Communication System (5G), 6th Generation Mobile Communication System (6G), xth Generation Mobile Communication System (xG (x is an integer or a decimal number, for example)), New Radio (NR), Global System for Mobile Communications (GSM (Registered Trademark)), CDMA2000, Ultra Mobile Broadband (UMB), IEEE 802.11 (Wi-Fi (Registered Trademark)), IEEE 802.16 (WiMAX (Registered Trademark)), IEEE 802.20, Ultra-WideBand (UWB), Bluetooth (Registered Trademark), and other wireless communication methods, as well as next-generation systems extended, modified, created, or specified based on these.

In other words, terms related to 5G in the present disclosure may be used interchangeably with terms of other technologies or systems. Furthermore, when such replacement is made, it should be understood by those skilled in the art that, for example, an NF may be interpreted as a function corresponding to that of an NF in 5G (or an apparatus having a similar function).

In the system 1, the UE 40 is provided with a wireless communication service using a Home Public Land Mobile Network (HPLMN) 1000, a Visited Public Land Mobile Network (VPLMN) 2000/2001, or the like.

The VPLMNs 2000 and 2001 correspond, respectively, to cellular networks to which a UE managed by the management apparatus 10 can connect. Hereinafter, the VPLMNs 2000 and 2001 will be referred to as a first cellular network and a second cellular network, respectively. Note that the telecommunications carrier (which may be referred to as an operator, carrier, administrator, or the like) of the second cellular network may be different from, or the same as, the telecommunications carrier of the first cellular network.

The HPLMN 1000 corresponds to a network distinct from the first cellular network and the second cellular network. Hereinafter, the HPLMN 1000 will be referred to as a third network. Note that the third network may include a cellular network or a non-cellular network. If the third network includes a cellular network, its telecommunications carrier may be the telecommunications carrier of the first cellular network or the second cellular network, or it may be a carrier different from those (for example, a Mobile Virtual Network Operator (MVNO) that provides services using the communication line(s) of the telecommunications carrier of the first cellular network or the second cellular network). In the latter case, the MVNO may correspond to a full MVNO. Note that in the present disclosure, the HPLMN may be used interchangeably with an Equivalent HPLMN (EHPLMN).

Note that the HPLMN 1000, the VPLMN 2000, and the VPLMN 2001 in the present disclosure need not correspond to the HPLMN or the VPLMN, respectively, and may be used interchangeably with networks having any names or functions.

Note that in the present disclosure, the cellular network may be used interchangeably with "mobile network", "wireless communication network", "5G Core Network (5GC)", "[3GPP] access [network]", and the like. The 5GC may, for example, include an optical fiber network. Furthermore, in the present disclosure, the non-cellular network may be used interchangeably with "non-[3GPP] access [network]".

In the system 1, a communication link directed toward (received by) the BS 30 (the AP 50) or originated from (transmitted by) the UE 40 may be referred to as an uplink (UL), and a communication link originated from (transmitted by) the BS 30 (the AP 50) or directed toward (received by) the UE 40 may be referred to as a downlink (DL).

The management apparatus 10 may manage mobility, sessions, authentication, subscriptions, and communication control of the UE 40, or may manage information related to these (e.g., parameters and logs). For example, the management apparatus 10 may perform control related to management information (described later) regarding the first cellular network, the second cellular network, or the third network for the UE 40. Note that the management apparatus 10 may be operated or managed by at least one of the telecommunications carriers of the first cellular network, the second cellular network, and the third network. In addition, the management apparatus 10 may have information on the UE 40 to be managed set in advance (or stored).

The management apparatus 10 may correspond to the above-described PCF, UDM, UDR, or the like defined for the 5GC. Note that although shown separately in Fig. 1 for the sake of explanation, the management apparatus 10 and one or more NF servers 20 (e.g., SMF, AMF, or UPF) may correspond to a single server. Furthermore, the management apparatus 10 may be an apparatus capable of transmitting instructions to the PCF, UDM, UDR, SMF, AMF, UPF, or the like, to perform control related to management information.

Although the management apparatus 10 is located within the HPLMN 1000 in Fig. 1, it is not limited thereto. For example, the management apparatus 10 may be located within the VPLMN 2000 or the VPLMN 2001, or may be located outside the HPLMN 1000, the VPLMN 2000, and the VPLMN 2001.

The NF server 20 provides at least one function of the above-described NF. In Fig. 1, the NF server 20 that provides the AMF, the NF server 20 that provides the SMF, the NF server 20 that provides the UPF, and the like are shown. Note that other NF servers 20 may be included in respective networks. In the present disclosure, the NF server 20 and the NF (such as the AMF, the SMF, and the UPF, for example) may be used interchangeably.

In the present disclosure, some or all of the NF servers 20 that normally exist within a given network may be located outside the given network. Furthermore, the NF servers 20 existing outside a given network (e.g., the VPLMN 2000 or the VPLMN 2001) may provide NF services/wireless communication services within the given network by communicating with the NF servers 20 within the given network.

Note that the NFs in the HPLMN 1000 may be referred to as H-NFs (e.g., H-SMF, H-UPF, H-PCF), and the NFs in the VPLMNs 2000 and 2001 may be referred to as V-NFs (e.g., V-SMF, V-UPF, V-PCF). The H-NF and the V-NF may be connected to each other and may transmit signals therebetween. For example, a signal transmitted from the UE 40 may be transmitted to the DN via the BS 30, the V-UPF of the VPLMN 2000, and the H-UPF of the HPLMN 1000.

The BS 30 provides a radio access network (RAN) to the UE 40. An area in which radio communication is possible in the radio access network is also referred to as a cell. In the present disclosure, the BS and the (radio) access network ((R)AN) may be used interchangeably.

The BS 30 is, for example, a gNB. The gNB provides NR user plane and control plane protocol terminations toward the UE, and is connected to the 5GC via an NG interface. The BS 30 may be an en-gNB. The en-gNB provides NR user plane and control plane protocol terminations toward the UE, and operates as a secondary node in E-UTRA-NR Dual Connectivity (EN-DC).

The AP 50 communicates with the UE 40 on the non-cellular network. In the present disclosure, the non-cellular network may include, for example, a wireless local area network (LAN) such as Wi-Fi (Registered Trademark), Bluetooth (Registered Trademark), or the like.

If the AP 50 provides untrusted non-3GPP access, the AP 50 may be connected to the AMF of the HPLMN 1000 via the N3IWF.

If the AP 50 corresponds to a trusted non-3GPP AP, the AP 50 may provide a trusted non-3GPP Access Network (TNAN) in cooperation with a TNGF or TWIF node. In this case, the AP 50 may connect to the AMF of the HPLMN 1000 via the TNGF or TWIF node. Note that the AP 50 may include the TNGF or TWIF node.

The UE 40 connects to the above-described RAN or the non-cellular network. The UE 40 may be, for example, a mobile terminal (a mobile communication terminal) such as a smartphone, a tablet terminal, or a wearable terminal, or a fixed communication terminal. The UE 40 may be a device mounted on a moving object (e.g., a vehicle) which is a movable object, or the moving object itself, or a device located in the moving object (carried by a person riding the moving object).

The UE 40 may be capable of using (or may be equipped with) separate Subscriber Identity Modules (SIMs) or Embedded SIMs (eSIMs) for each telecommunications carrier of the first cellular network and the second cellular network [, and the third network]. Furthermore, the UE 40 may switch connections to different networks by switching [Access Point Name (APN) configuration] profiles.

Note that any apparatus shown in Fig. 1 may be referred to as a network node, a node, a server, a [wired/wireless] communication apparatus, an information processing apparatus, or the like. Furthermore, the lines between the apparatuses in Fig. 1 indicate logical connection relationships between the apparatuses and need not be directly physically connected (they may be indirectly connected via another apparatus).

### <Configuration of Each Apparatus>

An example of a configuration of each apparatus (the management apparatus 10, the NF server 20, the BS 30, the UE 40, and the AP 50) according to the embodiment of the present disclosure will be described.

### <<Functional Configuration>>

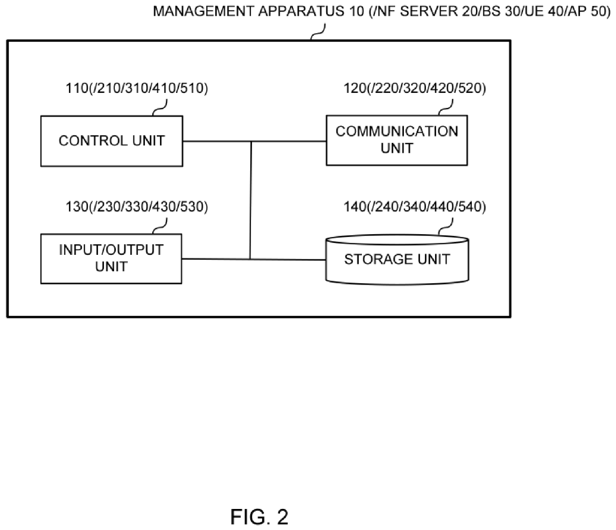

Fig. 2 is a diagram showing an example of a schematic functional configuration of each apparatus according to one embodiment of the present disclosure. For example, the management apparatus 10 includes a control unit 110, a communication unit 120, an input/output unit 130, and a storage unit 140.

Note that the NF server 20, the BS 30, the UE 40, and the AP 50 may also include similar functional configurations. For this reason, in Fig. 2, the reference signs for the functional blocks corresponding to respective apparatuses are shown by replacing the highest-order digit of the reference sign indicating each apparatus (for example, "3" in the highest-order digit of "30" for the BS 30) with "1". In the following, the functional blocks related to the management apparatus 10 will be described, but it should be understood that similar descriptions apply to the other apparatuses.

In the present example, the functional blocks related to characteristic parts in the present embodiment are mainly shown, and each apparatus may include other functional blocks necessary for other processing. Furthermore, the configuration may omit certain functional blocks.

The control unit 110 controls the management apparatus 10 and provides various functions. For example, the control unit 110 may control communication with other apparatuses via the communication unit 120. In addition, the control unit 110 may acquire information necessary for processing based on information received via the communication unit 120. The control unit 110 may also be referred to as a processing unit.

The communication unit 120 performs communication (transmission/reception) with other apparatuses via wired and/or wireless communication. The communication unit 120 may obtain information from received signals and output the information to the control unit 110, or convert information input from the control unit 110 into signals and transmit the signals. The communication unit 120 may also be referred to as a transmission unit, a reception unit, or a transmission and reception unit.

The input/output unit 130 may include an input unit that receives input through a person operation. The input unit may be connected to a given device, a storage medium, or the like, and receive input data. The input unit may output an input result to the control unit 110, for example.

Furthermore, the input/output unit 130 may include an output unit that outputs data, content, and the like in a form perceivable by a person. The output unit may be configured to include a display unit that displays images, a sound output unit that outputs sound, and the like.

The storage unit 140 stores (holds) various types of information used by the management apparatus 10 for processing. The control unit 110 may instruct the storage unit 140 to read or write data.

### <<Hardware Configuration>>

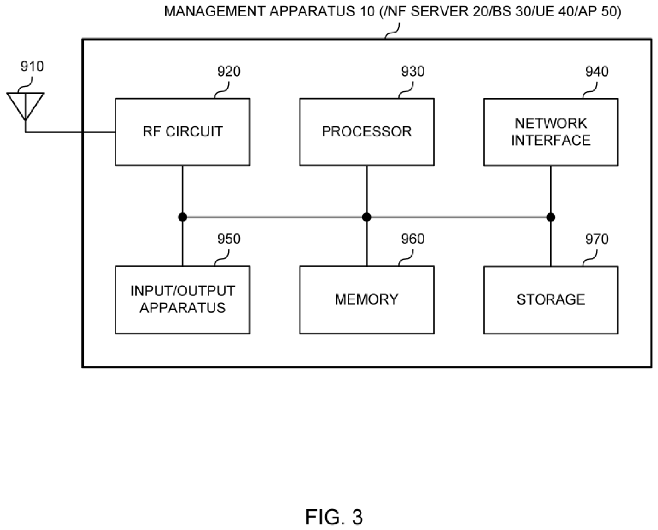

Fig. 3 is a diagram showing an example of a schematic hardware configuration of each apparatus according to one embodiment of the present disclosure. Each apparatus includes an antenna 910, a radio frequency (RF) circuit 920, a processor 930, a network interface 940, an input/output apparatus 950, a memory 960, and a storage 970.

For example, the above-described control unit X10 (X = 1, 2, 3, 4, 5, the same applies hereinafter as well) may be implemented by the processor 930. The communication unit X20 may be implemented by the antenna 910/the RF circuit 920/ the network interface 940. The input/output unit X30 may be implemented by the input/output apparatus 950. The storage unit X40 may be implemented by the memory 960/the storage 970.

Note that the hardware configuration of each apparatus may be configured to include one or more of the elements shown in Fig. 3, or may be configured not to include some elements. For example, the UE 40 does not need to include the network interface 940.

The antenna 910 converts signals into radio waves and radiates the radio waves into space. Furthermore, the antenna 910 receives radio waves in space and converts the radio waves into signals. The antenna 910 may include a plurality of antennas, may include a transmission antenna and a reception antenna, or may include a single antenna for transmission and reception. The antenna 910 may include a directional antenna or may include a plurality of antenna elements.

The RF circuit 920 performs analog processing of signals transmitted and received via the antenna 910. The RF circuit 920 may include a filter (e.g., a highfrequency filter, a low-pass filter), an amplifier, a modulator, a frequency synthesizer, an analog-to-digital conversion circuit, a digital-to-analog conversion circuit, a Fast Fourier Transform (FFT)/Inverse FFT (IFFT) processing circuit, and the like.

The RF circuit 920 may perform amplification, filter processing, demodulation to a baseband signal, and the like on received signals in a radio frequency band, and output the processed signals to the processor 930. The RF circuit 920 may perform modulation to the radio frequency band, filter processing, amplification, and the like on the baseband signals input from the processor 930, and transmit the signals in the radio frequency band via the transmission/reception antenna 910. Note that the RF circuit 920 may perform processing of a physical layer (e.g., processing of lower-level functions of the physical layer), or may perform beamforming processing such as analog beamforming processing, digital beamforming processing, and the like.

The processor 930 may control the entire apparatus. The processor 930 may read a program (a program code), software (software modules), data, and the like from the storage 970 into the memory 960, and perform various types of processing in accordance therewith. For example, the processor 930 may execute a program of an operating system (OS) loaded into the memory 960 to perform control.

The processor 930 may include a central processing unit (CPU) including interfaces for peripheral devices, a control apparatus, an arithmetic apparatus, registers, and the like. In addition, the processor 930 may include a microprocessor, a digital signal processor (DSP), an application specific integrated circuit (ASIC), a programmable logic device (PLD), a field programmable gate array (FPGA), and the like.

The processor 930 may perform digital processing of signals transmitted and received via the antenna 910 and the RF circuit 920. The digital processing may include processing of the physical layer (e.g., processing of higher-level functions of the physical layer), processing of the medium access control (MAC) layer and higher layers, and processing such as modulation, demodulation, encoding, decoding, and scrambling. The processor 930 also performs processing of signals transmitted and received via the network interface 940.

The processor 930 may include a plurality of processors, or may be a single processor. The plurality of processors may include a baseband processor that performs the above-described digital processing, and one or more processors that perform other types of processing (e.g., overall control).

The network interface 940 may be a network adapter, for example, and may be connected to an external network via a wired connection to transmit and receive signals.

Note that the RF circuit 920/the baseband processor/the network interface 940 may be configured integrally. The RF circuit 920, the baseband processor, and the network interface 940 may also be referred to as a network controller, a network card, a communication module, or the like.

The input/output apparatus 950 includes an input apparatus that receives external input (e.g., a keyboard, a mouse, a microphone, a switch, a button, a sensor, and the like), an output apparatus that provides output externally (e.g., a display, a speaker, a light emitting diode (LED) lamp, and the like), an apparatus integrating the input apparatus and the output apparatus (e.g., a touch panel), or the like.

The memory 960 is a computer-readable non-transitory recording medium, and stores programs to be executed by the processor 930, parameters related to the programs, and various other information. The memory 960 may include at least one of a read only memory (ROM), an erasable programmable ROM (EPROM), (an electrically erasable programmable ROM (EEPROM)), a random access memory (RAM), and a flash memory. All or part of the memory 960 may be included in the processor 930. The memory 960 may also be referred to as a register, a cache, a main memory (a main storage device), or the like.

The storage 970 is a computer-readable non-transitory recording medium, and stores various types of information. The storage 970 may include, for example, at least one of a flexible disk, a floppy (Registered Trademark) disk, a magneto-optical disk (e.g., a compact disc ROM (CD-ROM), a digital versatile disc, a Blu-ray (Registered Trademark) disc), a removable disk, a hard disk drive (HDD), a smart card, a flash memory device (e.g., a solid state drive (SSD)), or the like. The storage 970 may also be referred to as an auxiliary storage device.

Furthermore, each apparatus, such as the processor 930 and the memory 960, may be connected by a bus that communicates information. A single bus may be used within an apparatus, or different buses may be used between respective apparatuses.

Note that the BS 30 may be separated into three elements of a radio unit (RU), a distributed unit (DU), and a central unit (CU). The RU implements RF processing and the lower-level functions of the physical layer. The DU implements the higher-level functions of the physical layer, functions of the MAC layer, and functions of a radio link control (RLC) layer. The CU implements functions of a packet data convergence protocol (PDCP) layer, a service data adaptation protocol (SDAP) layer, and a radio resource control (RRC) layer.

In the present disclosure, the BS 30 may include a single apparatus that implements all functions of the RU, the DU, and the CU, or may include a plurality of apparatuses that respectively implement some of the functions of the RU, the DU, and the CU.

Furthermore, other apparatuses in the present disclosure may be implemented by a plurality of physically separated apparatuses. Conversely, a plurality of different apparatuses in the present disclosure (e.g., two or more of the management apparatus 10, the NF server 20, the BS 30, and the AP 50) may be implemented as a single apparatus.

Furthermore, some or all of the apparatuses in the present disclosure may mean logical apparatuses implemented by virtual machines, containers, Docker, or the like, or physical apparatuses that operate such logical apparatuses.

### <Operational Example>

Hereinafter, examples of operations of the respective apparatuses and functions according to the embodiment of the present disclosure will be described. The communication method (a wireless communication method, a control method) described below may be applied to the above-described system 1.

Note that in the following description of the present disclosure, reference signs may be omitted. For example, a UE in the following description may refer to the UE 40.

Each apparatus/function in the following description may be used interchangeably with one or more functional blocks in the apparatus/function (e.g., the control unit 110, the communication unit 120) or a hardware configuration (e.g., the RF circuit 920, the processor 930).

### <<Deletion of Unnecessary Management Information During Network Switching>>

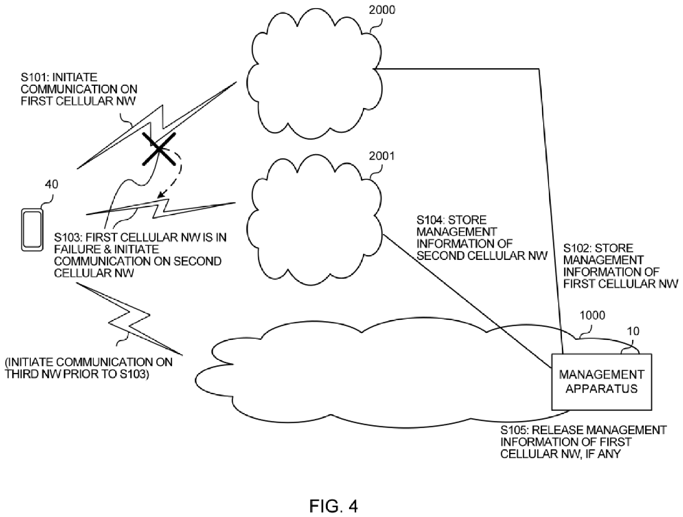

Fig. 4 is a diagram showing an example of deletion of unnecessary management information during network switching according to one embodiment of the present disclosure. In the present example, a case where, in the above-described system 1, a UE switches from communication on the first cellular network to communication on the second cellular network will be described. Note that Fig. 4 shows the apparatuses of the system 1 shown in Fig. 1 with some elements omitted.

In step S101, the UE to be managed by the management apparatus initiates communication on the first cellular network.

In the present disclosure, the initiation of communication may mean that at least one of the following is performed:
- Registration/re-registration (which may also be referred to as registration update) of the UE,
- Transition from an idle (which may also be referred to as Idle, RRC IDLE, etc.) or inactive (which may also be referred to as Inactive, RRC INACTIVE) state to an active (which may also be referred to as Active) or a connected (which may also be referred to as Connected, RRC CONNECTED, or the like) state,
- Connection establishment (e.g., PDU Session establishment), and
- Connection modification (e.g., PDU Session modification).

In step S102, the management apparatus stores management information on the first cellular network for the UE in step S101. Step S102 may be included in the initiation procedure in step S101.

The management information in the present disclosure may be information related to at least one of mobility, sessions, authentication, subscriptions, communication control, logs, and the like, and may include, for example, session information, authentication information, subscription information, Quality of Service (QoS) information, slice information, and the like. Note that the management information may be stored, for example, in the PCF, UDM, UDR, SMF, UPF, AMF, or RAN.

In the present disclosure, the terms "session", "PDU session", "Multi-Access (MA) PDU session", and the like may be used interchangeably. Note that a PDU session may refer to an association between a UE and a DN that provides a PDU connection service. Furthermore, an MA PDU session may refer to a PDU session having user plane resources in two networks. Here, the two networks may be two access networks, one access network and one non-access network, or two non-access networks. The MA PDU session may be related to Access Traffic Steering, Switching, and Splitting (ATSSS).

The session information may include at least one of a session identifier (ID), a session type, a context related to the session (e.g., context information related to a specific NF such as a RAN, an AMF, an SMF, or a UPF).

Furthermore, the authentication information/subscription information may be, for example, information on the authentication/subscription of a subscriber managed by the UDM.

Furthermore, the QoS information may include at least one of information on QoS flows, information on bearers, a 5G QoS Identifier (5QI), a QoS Class Identifier (QCI), and the like.

Furthermore, the slice information may be an identifier related to the slice, or may include at least one of, for example, Single Network Slice Selection Assistance Information (S-NSSAI), a Slice and Service Type (SST), a Dedicated Core Network ID (DCN ID), and the like. The term "slice" in the present disclosure may be used interchangeably with a Network Slice Instance (NSI)/Network Slice Subnet Instance (NSSI). In this case, the S-NSSAI may be used interchangeably with an NSI ID, an NSSI ID, or the like.

The management information may be stored or managed in association with information for identifying the UE to be managed (which may also be referred to as UE information), information for identifying the cellular network to be managed (which may also be referred to as network identification information), or the like.

The UE information may include at least one of the following:
- Generic Public Subscription Identifier (GPSI),
- Subscription Permanent Identifier (SUPI),
- Internet Protocol Version 4 (IPv4) address,
- Internet Protocol Version 6 (IPv6) address or IPv6 prefix,
- MAC address,
- External Group Identifier,
- Internal Group Identifier,
- Information regarding SIM/eSIM used by the UE (or installed in the UE) (e.g., Integrated Circuit Card Identifier (ICCID), Embedded Identity Document (EID)), and
- Any other identifier for identifying the UE (e.g., the UE's telephone number itself or information related to the telephone number (e.g., Mobile Station International Subscriber Directory Number (MSISDN))).

The network identification information may include at least one of the following:
- Information regarding a serving network (e.g., PLMN-ID, Network ID (NID)), and
- Information regarding the SIM/eSIM used by the UE (or installed in the UE) (e.g., ICCID, EID).

The management information in the present disclosure may, for example, be used in the UDM/PCF for managing subscription information and policy information of the UE, in the AMF for access/mobility management, or in the SMF for session establishment and modification. In the present disclosure, the management information may be used interchangeably with resources related to the management information.

In step S103, the UE initiates communication on a second cellular network different from the first cellular network.

Step S103 may be performed when normal termination processing of communication on the first cellular network is not performed (or before the normal termination processing is performed). Here, the normal termination processing may mean that one or more of the following are performed:
- Deregistration of the UE,
- Transition from an active/connected state to an idle/inactive state, and
- Connection termination/resource release (e.g., PDU session release, or the like).

For example, the UE may be communicating via the first cellular network, and upon the occurrence of a communication failure (e.g., being unable to connect due to a communication fault), the UE may perform processing in step S103 to switch to communication via the second cellular network. Note that in the present disclosure, [the determination of] the communication failure (or the likelihood of communication failure) may be used interchangeably with [the determination of] the necessity for switching. The UE may determine that a communication failure has occurred.

For example, if a communication (response) from a BS in the first cellular network is not detected for a certain period of time or a certain number of times [despite having performed uplink transmission to the BS], the UE may determine that communication with the BS has failed. Furthermore, if the received power or received quality of a signal (e.g., a specific reference signal) from the BS in the first cellular network is below a threshold for a certain period of time or a certain number of times, the UE may determine that communication with the BS has failed. In addition, if specific information (e.g., information indicating that a communication failure has occurred or is likely to occur, or information indicating that network switching is necessary) is notified [via the first cellular network or the third network], the UE may determine that communication via the first cellular network has failed.

In step S104, the management apparatus stores management information on the second cellular network for the UE. Step S104 may be included in the initiation procedure in step S103.

In step S104, the management information on the second cellular network may be determined (applied) based on the management information on the first cellular network, if the management information on the first cellular network remains. In other words, the management information on the first cellular network may be applied to communications on the second cellular network. This allows old management information to be applied to (reused for) new management information, thereby reducing the load on the management apparatus that generates/determines the management information, and accelerating generation/determination of the management information. For example, at least a part of the management information on the second cellular network may be the same as at least a part of the management information on the first cellular network (e.g., using the same values), or may be derived by extending, modifying, changing, or scaling at least a part thereof.

In step S104, the management apparatus may reflect the management information on the first cellular network in the subscription/policy information (UDM/PCF) of the UE in the second cellular network, or in session establishment/modification (SMF).

Note that in the present disclosure, the fact that the management information remains may mean that the management information is stored (held) in any NF of the first cellular network, the second cellular network, or the third network.

In step S105, if the management information on the first cellular network remains for the UE, the management apparatus may perform control for releasing the management information (e.g., release processing, transmission of instructions to release, or the like).

In step S105, the management apparatus may release the management information stored by any NF (or the management apparatus itself) of the third network. Note that in the present disclosure, the management apparatus may transmit instructions to the NF in the first cellular network/the second cellular network, in addition to or instead of the NF (or the management apparatus itself) in the third network, to perform control related to the management information (control for release/establishment (or re-establishment) as described above), and may cause such control to be performed. In the present disclosure, phrases such as "releasing the management information of a certain network", "transmitting instructions to release the management information to an apparatus (such as an NF) of a certain network", and the like may be used interchangeably.

Step S105 may be performed, similarly to step S103, when normal termination processing of communication on the first cellular network is not performed (or before it is performed). Furthermore, for example, with respect to the UE described above, there may be a constraint that the first cellular network and the second cellular network are not used simultaneously. In this case, the management apparatus may release the management information on the first cellular network in response to storing the management information on the second cellular network in step S104.

Furthermore, the management apparatus may, for example, determine that the management information on the first cellular network remains for the UE by the inclusion, in a request for connection establishment (e.g., PDU session establishment) from the V-SMF of the second cellular network, of specific information (e.g., information indicating cellular network switching), and may release the management information.

In step S105, the management apparatus may release the management information related to communication using the first cellular network and the third network (note that this communication has been initiated prior to step S103). For example, the communication may be communication that follows at least one of ATSSS, carrier aggregation, dual connectivity, and the like.

Note that in the present disclosure, the release of the management information on a certain network for a certain UE may mean the release of all of the management information, or may mean the release of only a part of the management information (e.g., mobility/session information). Furthermore, the release of the management information on a certain network for a certain UE may mean the release of the management information in all NFs/management apparatuses within (or related to) the network, or may mean the release of the management information in some of the NFs/management apparatuses within (related to) the network.

In step S105, for example, the management apparatus may release MA PDU session information related to the first cellular network and the third network for the UE. The management apparatus may perform control to release the MA PDU session spanning the first cellular network and the third network for the UE (e.g., invoking a service operation for updating a session management (SM) context of the PDU session (in the case where the management apparatus functions as the AMF), releasing the MA PDU session (in the case where the management apparatus functions as the SMF)).

Note that in the present disclosure, the release of the MA PDU session spanning the first cellular network and the third network may be used interchangeably with the complete release of the MA PDU session, or may be used interchangeably with the release of the MA PDU session on the first cellular network (single access). In the latter case, the MA PDU session on the third network may be maintained.

In step S105, control may be performed to establish (or re-establish) an MA PDU session spanning the second cellular network and the third network for the UE. For example, the management apparatus (or the PCF/UDM) may perform control to establish (or re-establish) (e.g., may trigger establishment (or re-establishment) of) the MA PDU session spanning the second cellular network and the third network for the UE, and may transmit information/instructions, to the SMF, to cause the control to be performed, and the SMF may perform the control.

Note that, in steps S103 to S105, for example, if an irregular event caused by an accident or the like occurs (e.g., failure to initiate communication on the second cellular network in step S103), the management apparatus may release the management information on the first cellular network for the UE if such management information remains.

According to the operational example described above, for example, even if the normal termination processing of communication on a certain cellular network is not performed, resources for that cellular network can be appropriately released upon the initiation of communication on another cellular network, thereby ensuring sufficient network resources. Furthermore, according to the above-described operational example, it is possible to suitably suppress the adverse effects on specific communication functions (e.g., ATSSS (MA PDU session) described later) caused by the management information remaining in the network [where the normal termination processing of communication is not performed] prior to the switching.

### <<Control Procedure Related to Deletion of MA PDU Session Information>>

As a more specific example of deletion of unnecessary management information during the network switching described above, a control procedure related to deletion of the MA PDU session information of the network before switching in the system configuration shown in Fig. 1 will be described in the following.

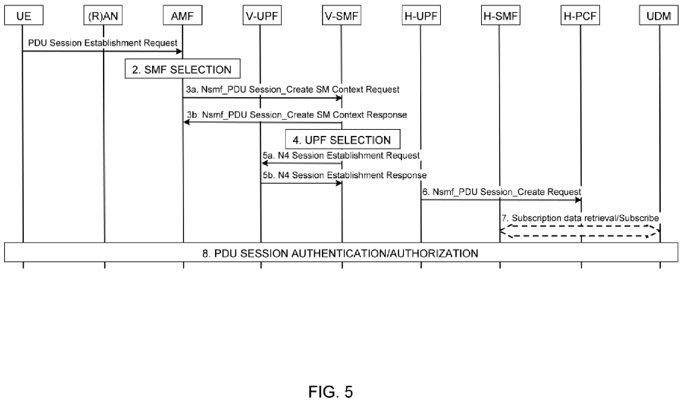

Fig. 5 is a diagram for describing an example of a control procedure for deleting MA PDU session information of a network before switching according to one embodiment of the present disclosure. Fig. 5 is an excerpt of the first eight steps in Figure 4.3.2.2.2-1: UE-requested PDU Session Establishment for home-routed roaming scenarios in Non Patent Literature 2.

First, the establishment of a normal PDU session as shown in Fig. 5 will be described. In step 1, the process begins with transmission of a PDU session establishment request including a PDU session ID and the like from the UE to the AMF, and in step 6, the V-SMF transmits a request to generate a PDU session to the H-SMF. In step 7, if Session Management Subscription data corresponding to information (e.g., SUPI) included in the request is not available, the H-SMF may acquire the data from the UDM (/UDR). In step 8, secondary authentication/authorization may be performed.

The procedure for establishing the MA PDU session is performed by slightly modifying the normal PDU session establishment procedure described above. For example, in step 1, the UE provides a request type called "MA PDU request" in the PDU session establishment request. Furthermore, in step 6, the V-SMF transmits a request to generate the MA PDU session (a request including the "MA PDU request" for generation of the PDU session) to the H-SMF.

The explanation now returns to deletion of unnecessary management information during network switching. As a step for deleting the MA PDU session information of the network before switching, after step 6 (e.g., between step 6 and step 7), the H-SMF/H-PCF may determine whether the MA PDU session information on a cellular network other than the cellular network corresponding to the request for the UE that is the subject of the request to generate the MA PDU session remains, and if the MA PDU session information remains, the H-SMF/H-PCF may release the MA PDU session information. Note that the step for the deletion may be positioned before, after, or during another step in the procedure for establishing the MA PDU session.

For example, consider a case where the UE is connected to the first cellular network (the VPLMN 2000 in Fig. 1) and the third network (HPLMN 1000 in Fig. 1) and an MA PDU session spanning the first cellular network and the third network has been established, and the normal termination processing of communication on the first cellular network is not performed and communication on the second cellular network is initiated. In this case, the VPLMN in Fig. 5 corresponds to the second cellular network (VPLMN 2001), and the HPLMN in Fig. 5 corresponds to the third network (the HPLMN 1000). In this case, during the step for the deletion, the MA PDU session information spanning the first cellular network and the third network is released.

Note that, according to the MA PDU session establishment procedure including the deletion step, even if the management information on the first cellular network is not released when registering the UE in the second cellular network, the management information can be suitably released during performance of the procedure for establishing the MA PDU session.

According to the control procedure regarding the deletion of the MA PDU session information described above, for example, even if the normal termination processing of the ATSSS (the MA PDU session) using a certain cellular network is not performed, ATSSS (an MA PDU session) using another cellular network can be established.

Under the existing ATSSS mechanism, only a single MA PDU session between one 3GPP access and one non-3GPP access can be used, and an MA PDU session after switching cannot be used if an MA PDU session before switching remains. According to the release of the management information shown in the present disclosure, even if switching of networks of a plurality of telecommunications carriers occurs, the ATSSS with non-3GPP access can be continued (or re-established), thereby achieving communication stability, high throughput, and the like.

### <Supplementary Notes>

With regard to one embodiment of the present disclosure, the following aspects are noted.

### [Note 1]

A management apparatus including:
a communication unit that communicates with at least one of a first cellular network and a second cellular network; and
a control unit that, when a terminal performing communication on the first cellular network initiates communication on the second cellular network before normal termination processing for the communication is performed, performs control to release management information on the first cellular network for the terminal.

### [Note 2]

The management apparatus according to Note 1, in which the management information on the first cellular network is information related to at least one of mobility, sessions, authentication, subscriptions, and communication control.

### [Note 3]

The management apparatus according to Note 1 or Note 2, in which the normal termination processing includes deregistration of the terminal.

### [Note 4]

The management apparatus according to any of Note 1 to Note 3, in which the control unit determines management information on the second cellular network based on the management information on the first cellular network.

### [Note 5]

The management apparatus according to any of Note 1 to Note 4, in which the management information on the first cellular network includes information on a Multi-Access Protocol Data Unit (MA PDU) session.

### [Note 6]

A method of a management apparatus including:
communicating with at least one of a first cellular network and a second cellular network; and
performing, when a terminal performing communication on the first cellular network initiates communication on the second cellular network before normal termination processing for the communication is performed, control to release management information on the first cellular network for the terminal.

### [Note 7]

The method according to Note 6, in which the management information on the first cellular network is information related to at least one of mobility, sessions, authentication, subscriptions, and communication control.

### [Note 8]

The method according to Note 6 or Note 7, in which the normal termination processing includes deregistration of the terminal.

### [Note 9]

The method according to any of Note 6 to Note 8, further including determining management information on the second cellular network based on the management information on the first cellular network.

### [Note 10]

The method according to any of Note 6 to Note 9, in which the management information on the first cellular network includes information on a Multi-Access Protocol Data Unit (MA PDU) session.

### [Note 11]

A terminal including:
a communication unit that communicates with at least one of a first cellular network and a second cellular network; and
a control unit that performs control to initiate communication on the second cellular network before normal termination processing for the communication on the first cellular network is performed, in which,
when the control is performed, management information on the first cellular network for the terminal is released.

### [Note 12]

A communication system including the management apparatus according to any of Note 1 to Note 5 and the terminal according to Note 11.

### <Modification Example>

Note that terms described in the present disclosure and terms necessary to understand the present disclosure may be used interchangeably with terms having identical or similar meanings.

In the present disclosure, terms such as apparatus, circuit, device, section, unit, and the like may be used interchangeably.

The information, parameters, and the like described in the present disclosure may be represented using absolute values, relative values from a given value, or corresponding other information. For example, a radio resource may be indicated by a given index.

The names used for parameters and the like in the present disclosure are not limiting in any respect. Furthermore, mathematical expressions and the like that use these parameters may differ from those explicitly disclosed herein.

The information, signals, and the like described in the present disclosure may be represented using any of various different technologies. For example, the data, instructions, commands, information, signals, bits, symbols, chips, and the like that may be referred to throughout the above description may be represented by voltage, current, electromagnetic waves, magnetic fields or magnetic particles, a light field or photons, or any combination thereof.

Information, signals, and the like that have been input or output may be stored in a specific location (e.g., memory) or managed using a management table. Information, signals, and the like that have been input or output may be overwritten, updated, or appended. The output information, signals, and the like may be deleted. The input information, signals, and the like may be transmitted to other apparatuses.

Any information (e.g., information on any parameters or variables) described in the present disclosure may be communicated between any apparatuses in the present disclosure. Furthermore, in the present disclosure, the notification of information is not limited to the aspects or embodiments described herein and may be performed using other methods.

Furthermore, the notification of given information (e.g., notification that "it is X") is not limited to explicit notification but may be performed implicitly (e.g., by not notifying the given information or by notification of other information).

Software should be broadly interpreted to mean instructions, instruction sets, code, code segments, program code, programs, subprograms, software modules, applications, software applications, software packages, routines, subroutines, objects, executable files, execution threads, procedures, functions, and the like, regardless of whether it is referred to as software, firmware, middleware, microcode, hardware description language, or by any other names.

Furthermore, software, instructions, information, and the like may be transmitted or received via a transmission medium. For example, when software is transmitted from a website, a server, or other remote source using at least one of wired technologies (such as coaxial cable, optical fiber cable, twisted pair, and digital subscriber line (DSL)) and wireless technologies (such as infrared and microwaves), at least one of these wired technologies or wireless technologies is included within the definition of a transmission medium.

In the present disclosure, "base station (BS)", "wireless base station", "relay station", "fixed station", "NodeB", "eNB (eNodeB)", "gNB (gNodeB)", "access point", "transmission point (TP)", "reception point (RP)", "transmission/reception point (TRP)", "panel", "cell", "sector", "cell group", "carrier", "component carrier", and the like may be used interchangeably.

In the present disclosure, the terms such as "mobile station (MS)", "user terminal", "user equipment (UE)", "terminal", and the like may be used interchangeably.

Any apparatus in the present disclosure may be referred to as a server, an apparatus, a transmission apparatus, a reception apparatus, a wireless communication apparatus, an information processing apparatus, and the like, and these terms may be used interchangeably. Any apparatus in the present disclosure may be a device mounted on a moving object which is a movable object, a device located in the moving object (carried by a person riding the moving object), or the moving object itself. The moving object may include, for example, vehicles, transport vehicles, automobiles, motorcycles, bicycles, connected vehicles, excavators, bulldozers, wheel loaders, dump trucks, forklifts, trains, buses, carts, rickshaws, ships and other watercraft, airplanes, rockets, satellites, drones, multicopters, quadcopters, balloons, and objects mounted thereon, but is not limited thereto. Furthermore, the moving object may perform autonomous traveling or automatic driving. Note that the moving object in the present disclosure may be used interchangeably with an object that does not move (e.g., an object that does not move but can be ridden by a person).

The respective aspects and embodiments described in the present disclosure may be used alone, in combination, or switched therebetween during execution. Furthermore, processing procedures, sequences, flowcharts, and the like of the respective aspects and embodiments described in the present disclosure may be rearranged, provided there is no contradiction. For example, with regard to the methods described in the present disclosure, various step elements are presented using an illustrative order and are not limited to the presented specific order.

Unless otherwise explicitly stated, the phrase "based on" used in the present disclosure does not mean "based only on". In other words, the phrase "based on" means both "based only on" and "based at least on".

Any reference to elements using designations such as "first", "second", or the like as used in the present disclosure does not necessarily limit the number or order of those elements. These designations may be used in the present disclosure as a convenient means of distinguishing between two or more elements. Therefore, references to the first and second elements do not mean that only two elements may be employed or that the first element must in some way precede the second element.

The terms "connected", "coupled" or any variations thereof, as used in the present disclosure, mean any direct or indirect connection or coupling between two or more elements and may include the existence of one or more intermediate elements between two elements that are "connected" or "coupled" to each other. The coupling or connection between elements may be physical, logical, or a combination thereof. The coupling or connection between elements may be via at least one of wired and wireless connections.

In the present disclosure, the term "A and B differ" may mean that "A and B differ from each other". Note that the term may mean that "A and B each differ from C". The terms such as "separated" and "coupled" may also be interpreted in the same manner as "differ".

In the present disclosure, when the terms "include", "including", and variations thereof are used, these terms are intended to be inclusive, similar to the term "comprising". Furthermore, the term "or" used in the present disclosure is intended not to mean an exclusive OR (XOR).

In the present disclosure, for example, if an article is added in translation, such as "a", "an", and "the" in English, the present disclosure may include cases where a noun following such articles is in the plural form.

In the present disclosure, terms related to "decision", "judgment", "determination", "selection", "calculation", "computation", "processing", "derivation", "search", "confirmation", "assumption", "expectation", and the like may be used interchangeably.

In the present disclosure, terms such as "or less", "less than", "or more", "more than", and "equal to" may be used interchangeably. Furthermore, terms meaning "good", "bad", "large", "small", "high", "low", "fast", "slow", "wide", "narrow" and the like may be used interchangeably among the positive, comparative, and superlative forms. Furthermore, in the present disclosure, terms meaning "good", "bad", "large", "small", "high", "low", "fast", "slow", "wide", "narrow" and the like may be used interchangeably not only between the positive, comparative, and superlative forms but also as expressions prefixed with "i-th" (where i is any integer) (for example, "highest" may be used interchangeably with an expression such as "i-th highest").

In the present disclosure, terms such as "of", "for", "regarding", "related to", "associated with", and the like may be used interchangeably.

Although the invention according to the present disclosure has been described in detail above, it will be apparent to those skilled in the art that the invention according to the present disclosure is not limited to the embodiments described herein. The description of the present disclosure is intended to be illustrative and should not be construed as limiting the invention according to the present disclosure.

This application is based on Japanese Patent Application No. 2024-011868, filed on January 30, 2024, the entire contents of which are incorporated herein by reference.

## Claims

1. A management apparatus comprising:
a communication unit that communicates with at least one of a first cellular network and a second cellular network; and
a control unit that, when a terminal performing communication on the first cellular network initiates communication on the second cellular network before normal termination processing for the communication is performed, performs control to release management information on the first cellular network for the terminal.

2. The management apparatus according to claim 1, wherein the management information on the first cellular network is information related to at least one of mobility, sessions, authentication, subscriptions, and communication control.

3. The management apparatus according to claim 1, wherein the normal termination processing includes deregistration of the terminal.

4. The management apparatus according to claim 1, wherein the control unit determines management information on the second cellular network based on the management information on the first cellular network.

5. The management apparatus according to any one of claims 1 to 4, wherein the management information on the first cellular network includes information on a Multi-Access Protocol Data Unit (MA PDU) session.

6. A method of a management apparatus comprising:
communicating with at least one of a first cellular network and a second cellular network; and
performing, when a terminal performing communication on the first cellular network initiates communication on the second cellular network before normal termination processing for the communication is performed, control to release management information on the first cellular network for the terminal.

7. The method according to claim 6, wherein the management information on the first cellular network is information related to at least one of mobility, sessions, authentication, subscriptions, and communication control.

8. The method according to claim 6, wherein the normal termination processing includes deregistration of the terminal.

9. The method according to claim 6, further comprising determining management information on the second cellular network based on the management information on the first cellular network.

10. The method according to any one of claims 6 to 9, wherein the management information on the first cellular network includes information on a Multi-Access Protocol Data Unit (MA PDU) session.

11. A terminal comprising:
a communication unit that communicates with at least one of a first cellular network and a second cellular network; and
a control unit that performs control to initiate communication on the second cellular network before normal termination processing for the communication on the first cellular network is performed, wherein,
when the control is performed, management information on the first cellular network for the terminal is released.

12. A communication system comprising the management apparatus according to claim 1 and the terminal according to claim 11.
